# EUROPEAN PATENT APPLICATION

(11) **EP 1 772 053 A1**
(43) Date of publication of application: **11.04.2007**
(21) Application number: 06255106.4
(22) Date of filing: 03.10.2006
(51) Int. Cl.: A01K 87/00, A01K 97/04

(54) **Fishing pole or rod with container for dispensing bait**

(30) Priority: 04.10.2005 GB 0520130
(71) Applicant: Bretton, Stephen Phillip, 18 Moorside Avenue Dewsbury, WF13 4QH (GB)
(72) Inventor: Bretton, Stephen Phillip, 18 Moorside Avenue Dewsbury, WF13 4QH (GB)
(74) Representative: Wood, Graham

(57) **Abstract**

The invention to which this application relates is a fishing rod or pole (16) and a container (2) to be provided therewith to allow bait to be dispensed into the water in which the fishing activity occurs. The container includes a cavity (8) in which the bait is placed and at least one aperture (9) allows the bait to be gradually dispensed from the cavity. As the container (2) can be located on the fishing rod or pole (16) with the fishing line (20) mounted and in place, so fishing can be done while the container (2) is in position and the location of the container (2) on the rod (16) can be intermediate the ends of the pole or rod so as to allow the bait to be dispensed close to the location of the fishing line (20) where it enters the body of water.

## Description

The invention to which this application relates is apparatus for use in fishing and in particular relates to apparatus for use in the type of fishing where bait is placed into the water to attract fish to a particular location within the water and thereby allow the fishing activity to take place in that area with the aim of catching one or more of the fish attracted to the location by the placing of the bait into the water.

There are several types of fishing, and the type of fishing to which this invention is particularly, although not necessarily exclusively related, is the type which occurs in relatively still areas of water such as a pond, lake or the like. In this type of fishing, a rod or pole is used, commonly referred to as a pole and hereinafter referred to as such in a non limiting manner. It has conventionally been the case that bait such as maggots, or other food matter, can be thrown or scattered onto the body of water and, as the bait sinks in the water, fish are attracted to feed on the bait and thereby locate the fish in what can still be a relatively large area of the body of water. However, it has been increasingly found that the owners of these fishing sites attempt to prevent the scattering of bait and instead encourage the placing of bait in a more controlled manner at a particular location.

Conventionally, the bait has been placed by providing a cup or other form of container at the end of a pole, with the cup or container having the bait placed therein. The pole is then extended such that the cup or container is at the free end of the same, with the opposing end of the pole being gripped by the fisherman. The pole is then placed out over the body of water until a particular desired location is reached at which the bait is to be placed into the water. The pole is then rotated and this causes the container to rotate and the bait to fall out of the container into the water.

Several problems have been experienced with this conventional form of apparatus, one of which is that the extension length of the pole can be perhaps 20 metres or more and, when one appreciates that one end of the pole is being gripped by the fisherman and the opposing end of the pole is free and there is the additional weight of the bait and container at the free end, there can be a considerable bowing or bending of the pole.

This, in turn, makes it difficult for control of the bait container to be achieved and maintained as the pole is extended onto the body of water and this can lead to the spillage of bait in areas of the body of water where it is not required and/or can make it difficult to control the container to allow the same to be turned to deposit the bait at the required location.

A further problem which is experienced is that the pole section which forms the free end of the pole, typically has the bait container located at the free end of said section. This therefore means that that section cannot be used to fish as a fishing line cannot extend from the free end as the container is positioned thereon. This therefore means that once the bait has been placed in the water the pole is required to be retracted to the bank side where the fisherman is located and the said pole section is replaced, or the container is removed so as to allow the fishing line to be threaded through to extend into the water from the free end of the pole. This is time consuming to the fisherman and can mean that the effect of the bait on attracting fish can have diminished by the time the fisherman is able to place their fishing hook into the body of water to attempt to catch the fish.

The aim of the present invention is to provide apparatus in a form which allows the controlled presentation of bait into a body of water and to do so in a manner which means that manipulation of the pole itself is reduced.

In a first aspect of the invention, there is provided a fishing pole or rod, said pole or rod provided to be gripped at or adjacent to a first end and having a distal, second end which is provided to be placed over a body of water and wherein at the distal second end, or intermediate the first and second ends there is provided a container for bait, said bait dispensed from the container through at least one aperture in the container.

In one embodiment, the container is mounted on the pole so as to be at or close to the distal second end of the pole.

In one embodiment the container is mounted on the pole intermediate the ends of the same.

In one embodiment the container is held on the pole by the pole passing through the container.

In one embodiment, the container is formed with two parts, said parts, when joined together, forming the container and also locating the container on the pole.

In a further aspect of the invention, there is provided a fishing pole or rod, said pole having a first end which is gripped by a user at or adjacent to the same and a second end to be placed over a body of water in use, said second end having an end of a fishing line extending therefrom and wherein there is provided a container for bait, said container located on the pole with the fishing line extending from the end of the pole simultaneously.

This aspect of the invention therefore allows the fishing pole to be used to carry bait out to a particular location in the body of water, for the bait to then be dispensed into the body of water and for the pole to be kept in position over the body of water and used for fishing as the fishing line can extend from the end of the pole at the same time. This as achieved by the positioning of the container at a location intermediate the first and second ends of the pole and therefore does not mask or otherwise prevent the fishing line from extending from the end of the pole.

This means that the pole does not need to be retracted or brought back into the riverbank once the bait has been placed in the body of water and prior to commencing fishing. Furthermore part or all of the pole does not need to be replaced to remove the container and be replaced with a pole or pole section with the fishing line extending therefrom. This therefore means considerable time savings and considerable frustration can be avoided.

In a further aspect of the invention, there is provided a container for the placement of fishing bait therein, and for use with a fishing rod or pole when attached thereto to dispense the bait into a body of water, said container having a cavity into which the bait is placed and said cavity provided with at least one aperture which allows the bait to fall therethrough to be dispensed.

Typically said at least one aperture is located on the container so as to lie at or adjacent to the base of the same when the container is in use, such that the effect of gravity causes bait to pass through the aperture from the cavity. In one embodiment the container is provided such that the pole can be rotated from a position in which the aperture is in a non dispensing position to a position in which the aperture faces towards the body of water and the bait is dispensed therethrough.

In one embodiment, the at least one aperture is of a dimension so as to allow a gradual dispensation of bait from the cavity and thereby allow a gradual prolonged dispensation of the bait into the water.

In one embodiment, the container is provided with a lid section such that once the bait has been placed into the container cavity, the lid section can be attached and hence enclose the bait within the cavity such that the bait can only leave the cavity through the said at least one aperture.

In one embodiment the container includes location means therein to allow the container to be located on a fishing pole. In one embodiment the pole passes through the cavity of the container once in position on the pole.

The location means can be in the form of a pair of holes in the opposing container walls through which the pole passes or can be recessed portions in the opposing container walls at the interface of the two parts of the container, with, in one embodiment, the pole being placed in the recesses of a first part of the container and by bringing the second part of the container into position with the first, the pole is located with the container.

In a further aspect of the invention there is provided a method of fishing with a pole or rod, said method comprising the steps of placing a quantity of bait into a container and locating the container on the pole or rod, gripping one end of the rod and moving the distal second end of the pole over a body of water to a particular location, dispensing the bait from the container at or adjacent to said location and wherein the container is located intermediate the first and second ends of the pole.

In one embodiment the method includes the steps of extending a fishing line from the second distal end of the pole and into the body of water to catch fish simultaneously with the dispensing of bait from the container.

Specific embodiments of the invention are now described with reference to the accompanying drawings wherein;
Figures 1a and b illustrate a container in accordance with one embodiment of the invention;
Figure 2 illustrates an elevation of the container with the second distal end of the fishing pole or rod, and;
Figure 3 illustrates a fishing pole and container in accordance with the invention, in use.

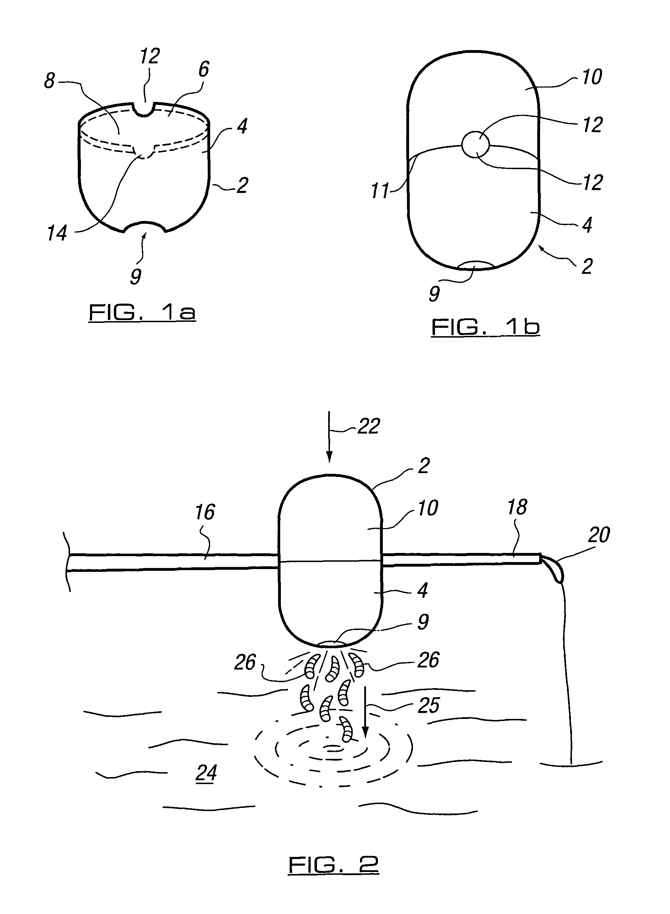

Referring first to Figures 1a and b, there is illustrated a container in accordance with one embodiment of the invention. In Figure 1a, only the bottom part 4 of the container is shown which has an opening 6 leading into a cavity 8 which in turn leads to an aperture 9 at the base of said cavity 8. The opening 6 is provided to allow bait which is to be held within the container, to be poured or otherwise placed into the cavity 8. If required a funnel or other formation (not shown) can be provided to allow improved placing of the bait into the cavity.

Once the bait is in position within the cavity 8, the second part of the container 10 is placed onto the part 4 to form a larger inner cavity 8. Also provided on the rims of the parts 4, 10 at the interface 11 between the parts are location recesses 12, 14, the use of which will be explained subsequently. Thus, the container formed in Figure 1b, with the bait placed therein, is ready for use. In one embodiment, closure means (not shown) may be provided for the aperture 9 and said closure means are held in position to thereby maintain all of the bait within the cavity 8, until the container is ready for use whereupon the closure means can be removed or moved so as to open the aperture 9.

Figure 2 illustrates the container 2 in use on the distal end 18 of a fishing pole 16, with only the distal end shown for the purpose of illustration. The pole is provided with a fishing line 20 extending from the end thereof and container 2 is shown as being positioned close to the free end 18 of the pole but not over the end thereby allowing the fishing line 20 to be used, as will be explained hereon in.

The bait is therefore placed into the cavity 8 and, to position the container onto the pole, any suitable mechanical location means can be provided and, in this case, the location means recesses 12, 14 are used. In this case, the first part 4 of the container is placed on the underside of the fishing pole with the pole. The second part 10 of the container is then placed onto the first part 4 from the top of the fishing pole, such that the recesses in the top part are placed over the top part of the fishing pole to engage the fishing pole between the container parts 10, 4 when the container parts are engaged together. Thus the fishing pole is engaged and passes through the container. If necessary mechanical engagement means can be provided between the parts 4, 10.

With the container in position and the aperture 9 open, so the fishing pole end can be moved, by the fisherman gripping the first end of the pole, out over the body of water 24 to a particular location where the bait is to be dispensed. It is appreciated that some of the bait may fall out of the container through the aperture 9 as the pole is being moved towards the desired location but this may not itself represent a significant problem as not much of the bait will fall out. Alternatively, closure means can be provided so as to be actuated and opened, such as by a cord connected thereto, once the distal second end 18 and hence container 2 has been positioned as required over the body of water. In any case, once the aperture 9 is opened, bait 26 will start to fall from the aperture 9 and into the body of water 24 as indicated by arrows 25 in Figure 2.

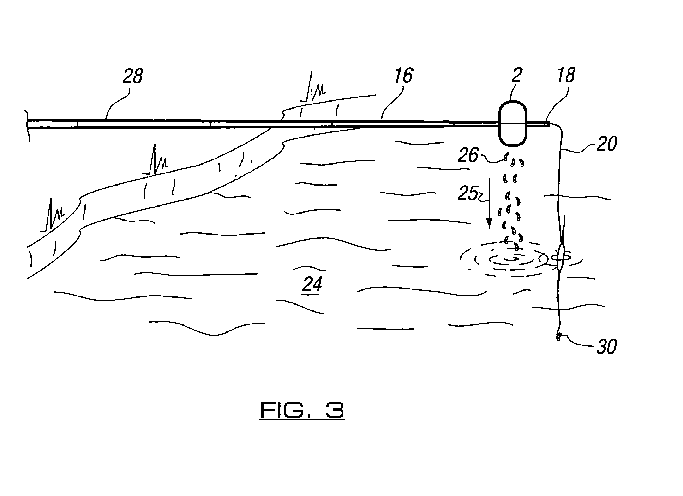

Figure 3 illustrates the same arrangement as in Figure 2 but shows the entire fishing pole 16 with the first end 28 which would be gripped by the fisherman (not shown) and the distal second end 18 with the container 2 located adjacent thereto and bait 26 being dispensed therefrom. Also shown in Figure 3 is how the fishing line 20 can be used to fish in the body of water 24 simultaneously with the dispensation of the bait 26 from the container 2 into the water. This therefore ensures that as the bait is being dispensed into the water and is attracting fish to that particular location so, the hook 30 at the end of the fishing line 20 can be in the water and thereby maximise the benefit of the bait.

There is therefore provided a controlled and efficient manner for the dispensation of bait into a particular location on a body of water.

## Claims

1. A fishing pole or rod, said pole or rod provided to be gripped at or adjacent to a first end and having a distal, second end which is provided to be placed over a body of water and wherein at the distal second end, or intermediate the first and second ends, there is provided a container for bait, said bait dispensed from the container through at least one aperture in the container.

2. A pole or rod according to claim 1 wherein the container is mounted on the pole so as to be closer the distal second end of the pole or rod than the first end.

3. A pole or rod according to claim 1 wherein the container is connected to the pole or rod such that the pole or rod passes through the container.

4. A pole or rod according to claim 1 wherein the container is formed with two parts, said parts, when joined together, forming the container and locating the container on the pole or rod.

5. A fishing pole or rod according to any of the preceding claims wherein said pole or rod has a fishing line extending therealong and from said second end while the container is positioned on the rod.

6. A fishing pole or rod according to any of the preceding claims wherein the rod or pole can be used to disperse bait and fish simultaneously.

7. A fishing pole or rod according to any of the preceding claims wherein the container includes a cavity into which the bait to be dispensed can be placed, and disposed gradually via an aperture in connection with said cavity.

8. A fishing rod or pole according to any of the preceding claims wherein the container is located on the tod such that bait dispensed from the rod lands on the body of water at or adjacent to the point of entry of the fishing line into the body of water.

9. A container for the placement of fishing bait therein, and for use with a fishing rod or pole when attached thereto to dispense the bait into a body of water, said container having a cavity into which the bait is placed and said cavity provided with at least one aperture which allows the bait to fall therethrough to be dispensed.

10. A container according to claim 9 wherein the at least one aperture is located so as to lie at or adjacent to the base of the container when the container is in the in use position on the rod or pole.

11. A container according to claim 9 wherein the aperture is of a dimension so as to allow gradual dispensation of bait from the cavity.

12. A container according to claim 9 wherein a lid is provided and once the bait has been placed into the cavity, the lid is positioned to enclose the bait within the cavity such that the bait can only the leave the cavity through the said at least one aperture.

13. A container according to claim 9 wherein the container includes location means to allow the container to be located on the fishing pole.

14. A container according to claim 13 wherein the pole passes through the cavity of the container once in position on the pole.

15. A container according to claim 9 wherein the closure means are provided which allow the aperture to be retained in a closed condition until it is required to dispense bait.

16. A fishing pole or rod, said pole having a first end which is gripped by a user at or adjacent to the same and a second end to be placed over a body of water in use, said second end having an end of a fishing line extending therefrom and wherein there is provided a container for bait, said container located on the pole with the fishing line extending from the end of the pole simultaneously.

17. A method of fishing with a pole or rod, said method comprising the steps of placing a quantity of bait into a container and locating the container on the pole or rod, gripping one end of the rod and moving the distal second end of the pole over a body of water to a particular location, dispensing the bait from the container at or adjacent to said location and wherein the container is located intermediate the first and second ends of the pole.

18. A method according to claim 16 wherein the a fishing line is extended from the second distal end of the pole and into the body of water to catch fish, simultaneously with the dispensing of bait from the container.

19. A method according to claim 17 wherein the aperture of the container is retained in a closed condition by closure means until the container is positioned over the body of water.

20. A method according to claim 17 wherein the container can be rotated to allow the dispensation of bait when the aperture in the container faces the body of water.
